# EUROPEAN PATENT APPLICATION

(11) **EP 4 506 883 A1**
(43) Date of publication of application: **12.02.2025**
(21) Application number: 23190137.2
(22) Date of filing: 07.08.2023
(51) Int. Cl.: G06T 5/00, G06T 7/11, G06T 5/77

(54) **IMAGE RECONSTRUCTION SYSTEM**

(71) Applicant: Rockwell Collins, Inc., Cedar Rapids, IA 52498 (US)
(72) Inventor: Mclean, Angus L., Brandenton FL, 34208 (US); Frewer, Sam Antony, Crawley, West Sussex, RH10 4PW (GB); Palop, Hector, Cork, CO T12 EV79 (IE); Yarlapati Ganesh, Naresh, Cork, CO T12 X295 (US)
(74) Representative: Dehns

(57) **Abstract**

A method (200) of reconstructing an image. The method includes performing panoptic segmentation of the image (210) and performing instance segmentation (202) of the image. The method further includes performing recurring image inpainting (220) of the image. The recurring image inpainting (220) of the image includes applying a first mask (203) corresponding to the first object to the image, inpainting the first mask (204) to form a partially reconstructed image, applying a second mask (203) corresponding to the second object to the partially reconstructed image, and inpainting (204) the second mask.

## Description

### TECHNICAL FIELD

This disclosure relates to a system for image reconstruction and to a method of reconstructing an image, in particular to inpainting of panoptically segmented portions of an image, for example in the context of aerial imagery and mapping.

### BACKGROUND

Where aerial imaging as been used in the past, for example in mapping, problems may arise as a result of objects, such as building and trees, occluding areas of the image. These occlusions often result in incomplete or inaccurate representation of the environment.

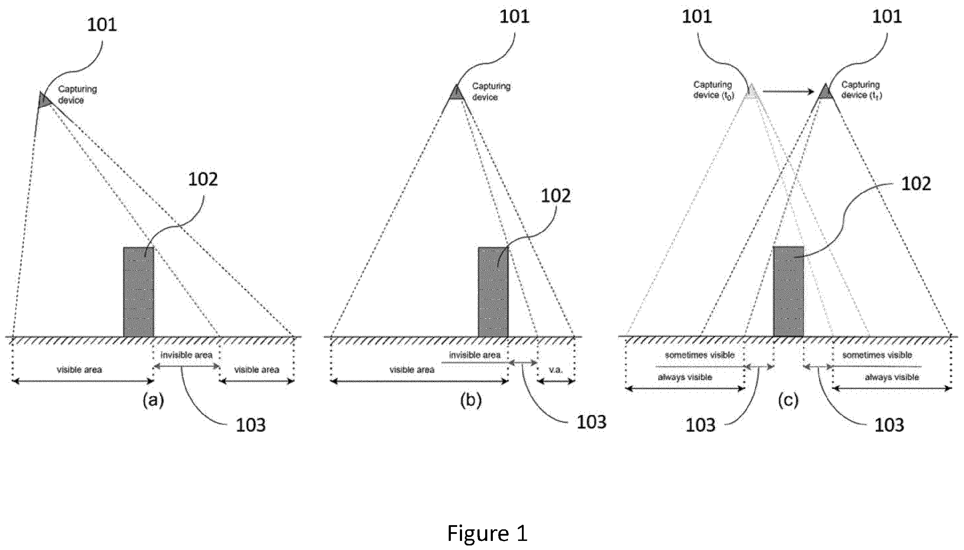

Figure 1a exemplifies a typical situation where an image taken by an image capturing device 101 is occluded by an object 102, which in this example is a building. As can be seen from Figure 1a, a portion of the area being mapped is occluded by the object 102. This portion of the mapped area is therefore referred to as the invisible area 103.

Figure 1b shows that if the image capturing device is moved, the invisible area 103 changes.

Figure 1c shows that by capturing images from multiple different positions and combining them, the invisible area can be mapped out. This approach is known as "structure from motion". However, structure from motion is limited by the requirement to capture images from all necessary angles. This process can be time consuming and inefficient, particularly if several images are needed to map an invisible area 103. For example, as a result of multiple objects 102 occluding an invisible area 103 from different angles.

### SUMMARY

When viewed from a first aspect, the present disclosure provides a method of reconstructing an image, the method comprising: performing panoptic segmentation of the image; wherein the panoptic segmentation of the image comprises: performing semantic segmentation of each pixel, or group of pixels, of the image to classify the pixel, or group of pixels, into one of at least a first class and a second class; and performing instance segmentation of the image to identify at least a first object of the first class and a second object of the first class; wherein the method further comprises: performing recurring image inpainting of the image; wherein the recurring image inpainting of the image comprises: applying a first mask corresponding to the first object to the image; inpainting the first mask to form a partially reconstructed image; applying a second mask corresponding to the second object to the partially reconstructed image; and inpainting the second mask.

Semantic segmentation may comprise classifying each pixel, or group of pixels, in an image into a class of objects. These classes may include, for example, buildings, roads, trees, cars, etc..

Instance segmentation may comprise separating different objects within an image.

Panoptic segmentation comprises performing both semantic segmentation and instance segmentation of an image.

The process of image masking, i.e. applying a mask to an image, may comprise erasing a portion of an image, in the shape of the mask applied to the image.

The process of image inpainting may comprise filling in missing portions of an image with plausible content.

The process of recurring image inpainting may comprise iteratively (e.g. alternately) masking and image inpainting of an image.

In some examples the image is a light detection and/or ranging (LiDAR) image.

In some examples, the image is a photographic image.

In some examples, the method further comprises capturing the image, e.g. using a (photographic) camera or a LiDAR scanner.

In some examples, performing the semantic segmentation comprises classifying each pixel of the image, e.g. individually.

In some examples, the first class comprises at least one of: buildings, vehicles, and foliage.

In some examples, performing the semantic segmentation comprises using a convolutional neural network to perform the semantic segmentation.

In some examples, performing image inpainting comprises using a convolutional neural network to perform the image inpainting.

In some examples, the image inpainting is performed independently of the semantic segmentation. In other words, the two processes are orthogonal in these examples and the output of one process is not considered as an input to the other process.

In some examples, the image inpainting is semantically guided by the semantic segmentation. Semantically guiding of the image inpainting may comprise using the output of the semantic segmentation process as an input to the image inpainting process.

In some examples, the image is an aerial image.

In some examples, performing the instance segmentation of the image comprises identifying a third object of the second class and a fourth object of the second class; and performing recurring image inpainting of the image further comprises: applying a third mask corresponding to the third object to the partially reconstructed image; inpainting the third mask; applying a fourth mask corresponding to the fourth object to the partially reconstructed image; and inpainting the fourth mask.

In some examples, the second class comprises at least one of: buildings, vehicles, and foliage.

When viewed from a second aspect, the present disclosure provides an image reconstruction system comprising: a panoptic segmentation module for panoptically segmenting an image; an image masking module for applying masks to the image; an image inpainting module for inpainting the mask on the image; wherein the panoptic segmentation module is arranged to semantically segment each pixel, or group of pixels, of the image to classify each pixel, or group of pixels, into one of at least a first class and a second class; wherein the panoptic segmentation module is arranged to instance segment the image to identify at least a first object of the first class and a second object of the first class; wherein the image masking module is arranged to apply a first mask corresponding to the first object to the image; wherein the image inpainting module is arranged to inpaint the first mask to form a partially reconstructed image; wherein the image masking module is arranged to apply a second mask corresponding to the second object to the partially reconstructed image; and wherein the image inpainting module is arranged to inpaint the second mask.

In some examples, the image reconstruction system comprises an image capturing device, e.g. a (photographic) camera or a LiDAR scanner. For example, the image capturing device may be configured to capture the image.

In some examples, the panoptic segmentation module is arranged to use a pre-trained panoptic segmentation model.

In some examples, the image reconstruction system comprises the pre-trained panoptic segmentation model.

In some examples, the image inpainting module is arranged to use a pre-trained image inpainting model.

In some examples, the image reconstruction system comprises the pre-trained image inpainting model.

In some examples the image is a light detection and/or ranging (LiDAR) image.

In some examples, the image is a photographic image.

In some examples, the panoptic segmentation module is arranged to classify each pixel of the image, e.g. individually.

In some examples, the first class comprises at least one of: buildings, vehicles, and foliage.

In some examples, the pre-trained panoptic segmentation model comprises a convolutional neural network.

In some examples, the pre-trained image inpainting model comprises a convolutional neural network.

In some examples, the image inpainting module is arranged to operate independently of the panoptic segmentation module. In other words, the two processes of semantic segmentation and image inpainting are orthogonal in these examples and the output of one process is not considered as an input to the other process.

In some examples, the image inpainting module is arranged to be semantically guided. In other words, the image inpainting module may be arranged to use the semantic segmentation by the panoptic segmentation module to guide image inpainting.

In some examples, the image is an aerial image.

In some examples, the panoptic segmentation module is further arranged to instance segment the image to identify a third object of the second class and a fourth object of the second class; and the image inpainting module is further arranged to apply a third mask corresponding to the third object to the partially reconstructed image; inpaint the third mask; apply a fourth mask corresponding to the fourth object to the partially reconstructed image; and inpaint the fourth mask.

In some examples, the second class comprises at least one of: buildings, vehicles, and foliage.

### BRIEF DESCRIPTION OF DRAWINGS

One or more non-limiting examples will now be described, by way of example only, and with reference to the accompanying figures in which:
Figure 1a shows an object occluding a portion of an area to be mapped by an image capturing device;
Figure 1b shows the effect of movement of the image capturing device on the invisible area, i.e. the portion of the area to be mapped that is occluded;
Figure 1c shows the image capturing device capturing an image of the area to be mapped from different angles and the effect on the invisible area;
Figure 2 shows a method 200 of reconstructing an image;
Figure 3 shows an example of semantic segmentation of a photographic image;
Figure 4 shows an example of panoptic segmentation of an image;

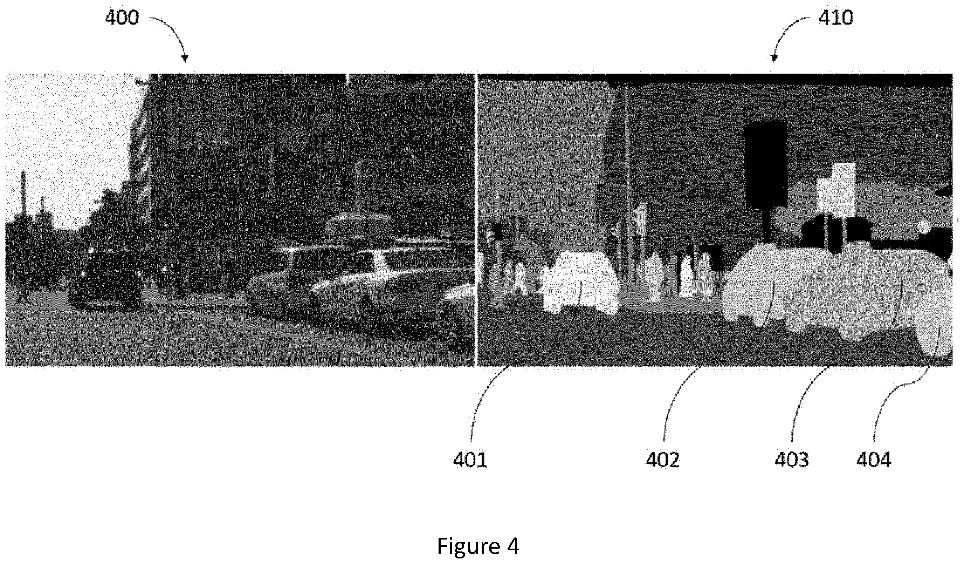

Figure 4 shows an example of panoptic segmentation of an image;

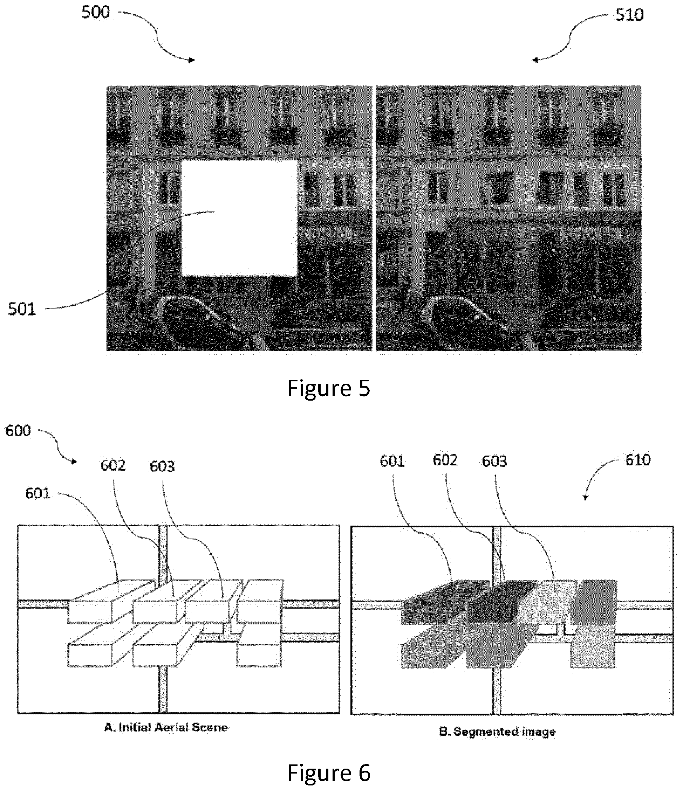

Figure 6 shows panoptic segmentation of an image of an initial aerial scene to form a panoptically segmented image;

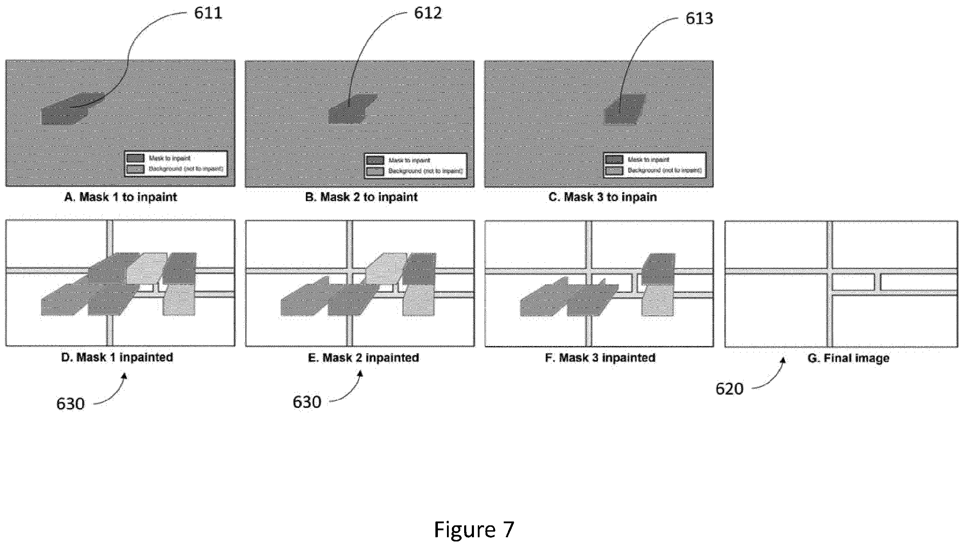

Figure 7 shows the process of recurring image inpainting of the initial aerial scene of Figure 6; and

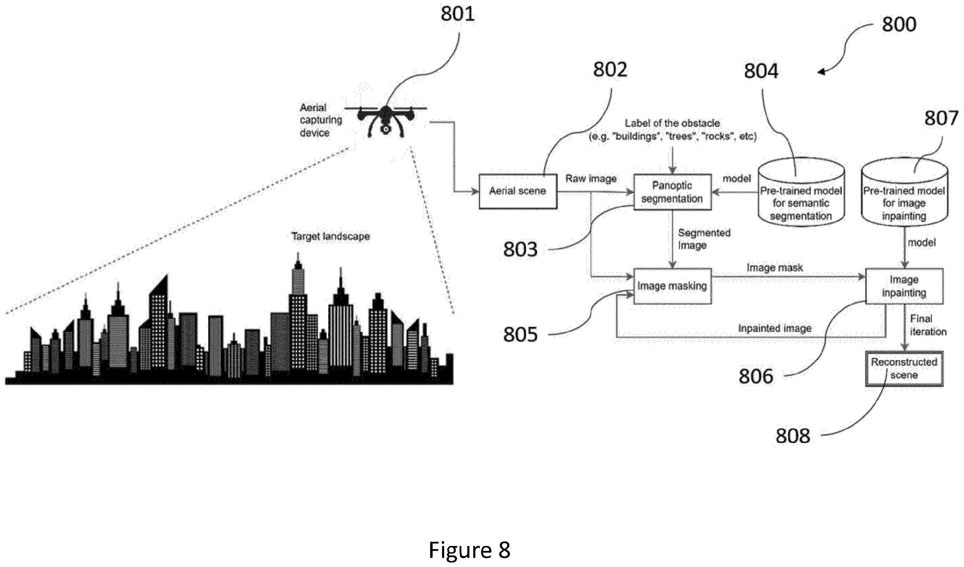

Figure 8 shows an image reconstruction system 800.

### DETAILED DESCRIPTION

As discussed above, with reference to Figures 1a to 1c, the photogrammetric range imaging technique known as structure from motion is limited by the requirement to capture images from multiple different angles. This process can be time consuming and inefficient, particularly if several images are needed to map an invisible area 103. For example, as a result of multiple objects occluding the invisible area 103 from different angles.

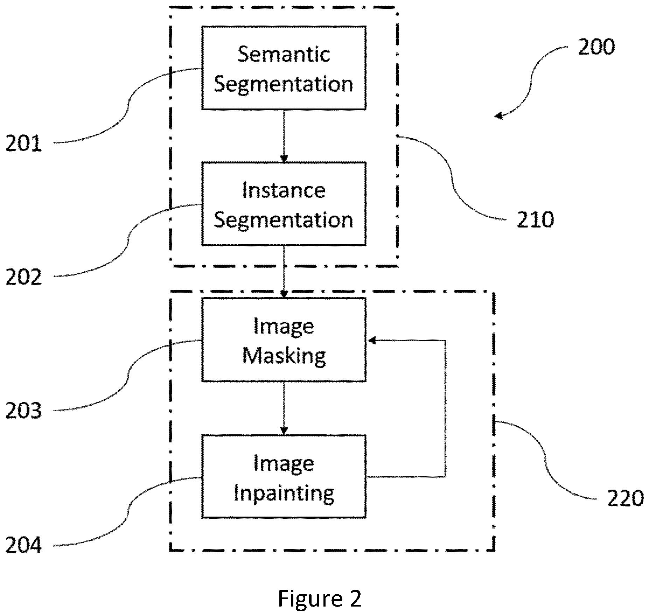

Figure 2 shows a method 200 of reconstructing an image. The method comprises a first step 201 of semantically segmenting the image. Semantic segmentation 201 may be defined as classifying each pixel, or group of pixels, in an image into a class of objects. These classes may include, for example, buildings, roads, trees, cars, etc..

The method 200 comprises a second step 202 of further segmenting the semantically segmented image by a process known as instance segmentation 202. Instance segmentation 202 may be defined as the process of separating different objects within an image. Depending on the image being processed, different objects that are separated may be in the same class (or in different classes) of objects.

When performed in combination with semantic segmentation 201, instance segmentation 202 segments an image into separate objects, each of which is classified. This overall process is known as panoptic segmentation 210.

The method 200 comprises a third step 203 of applying a mask to the captured image, e.g. the photographic image. The shape of the mask corresponds to a panoptically segmented object of an appropriate class. An appropriate class may include, for example, buildings and other objects that are likely to occlude an invisible area from view. The process of image masking 203 may be described as erasing a portion of an image, in the shape of the mask applied to the image.

The method 200 comprises a fourth step 204 of inpainting the masked area. Image inpainting 204 may be described as filling in missing portions of an image with plausible content.

The steps of image masking 203 and image inpainting 204 in the method 200 are iterative process steps. In other words, a first mask is applied to the captured, e.g. photographic, image. The first mask is then inpainted to form a partially reconstructed image. After this process is performed, a second mask is applied to the captured image and the second mask is inpainted. This process will iterate through each panoptically segmented object of an appropriate class until a mask has been applied to the captured image, and the masked area has been inpainted, for each object. This iterative process may be called recurring image inpainting 220.

The method 200 of reconstruction of an image may thus enable the reconstruction of an area to be mapped using only a single image. Each step of this method 200 will be further understood, with reference to additional figures, below.

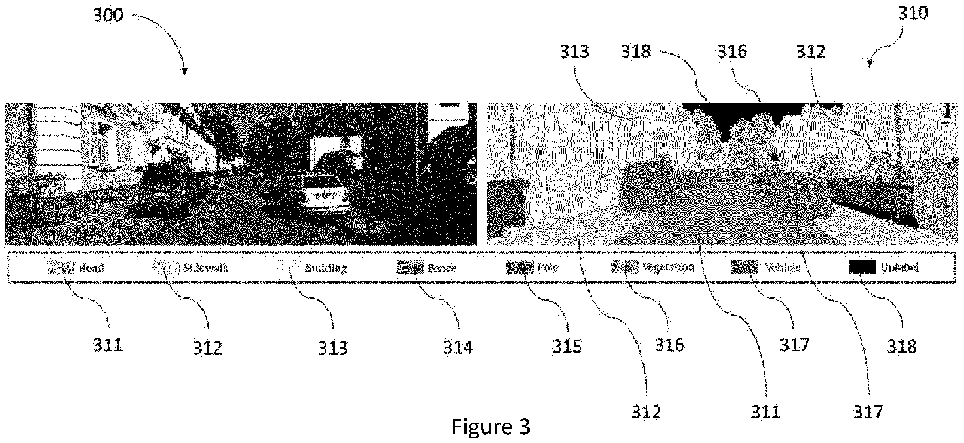

Figure 3 shows an example of semantic segmentation of a photographic image 300 to form a semantically segmented image 310. As can be seen from Figure 3, the semantic segmentation process classifies each pixel, or group of pixels, into one of several classes. In this example, the classes include road 311, sidewalk (pavement) 312, building 313, fence 314, pole 315, vegetation 316, vehicle 317 and other areas that are unlabelled (unclassified) 318.

It can be seen from this example that semantic segmentation of an image 300 does not distinguish between pixels, or groups of pixels, classified as the same class (type) of object. For example, all of the cars present in the photographic image 300 have been classified as vehicles 317. However, within this class 317 of objects, each individual car is not separated from the other cars in the group.

Semantic segmentation, such as the semantic segmentation shown in Figure 3, may be performed using deep architectures, such as convolutional neural networks (CNNs). This approach may be much more accurate and efficient than alternative methods of semantic segmentation of an image. However, different methods for semantic segmentation also exist. These include traditional machine learning techniques, such as support vector machines and decision trees.

Figure 4 shows an example of panoptic segmentation of an image 400. In this example, each individual object in the original image has been separated and each pixel, or group of pixels, in the image is classified into a type of object. This process forms a panoptically segmented image 410.

An example of the differences between semantic segmentation and panoptic segmentation can be seen by comparing Figures 3 and 4. In Figure 4, it can be seen that a first vehicle 401, a second vehicle 402, a third vehicle 403 and a fourth vehicle 404 have each been identified within the image. In contrast, in Figure 3 the vehicles 317 have not been separated into different objects and are instead only considered as a whole.

Figure 5 shows an example of masking and image inpainting. In Figure 5, a mask 501 has been applied to a photographic image 500. By inpainting the masked area 501 of the image, a reconstructed image 510 is produced.

Image inpainting is the process of filling in missing or corrupted parts of an image with plausible content. The goal is to make the inpainted regions look as natural and seamless as possible, while still being consistent with the surrounding context. This task may be achieved through data-driven deep learning-based image inpainting approaches that can generate the missing pixels in an image with good global consistency and local fine textures.

Image inpainting may be performed as a process that is independent of semantic segmentation of the image. In other words, image inpainting may be agnostic to the classification of the objects in an image and may instead rely solely on other contextual information. Alternatively, image inpainting may be semantically guided by the classification of the pixels or groups of pixels within the image. Performing this process independently of semantic segmentation may lead to more accurate results, as the overall output is less biased by the results and accuracy of the semantic segmentation of the image.

Figures 6 and 7 show the combination of the processes mentioned above.

Figure 6 shows that panoptic segmentation of an image 600 of an initial aerial scene (Figure 6A) forms a panoptically segmented image 610 (Figure 6B). Each building of the image 600 of the initial aerial scene has been classified and separated into individual objects by the panoptic segmentation process. It can be seen from the image that, among others, a first building 601, a second building 602 and a third building 603 have been identified.

Figure 7 shows the process of recurring image inpainting of the image 600 shown in Figure 6. The first step of this process is to apply a first mask 611 corresponding to the first building 601, as identified by the panoptic segmentation process, to the image 600 of the initial aerial scene (Figure 7A). The first mask 611 is then inpainted to form a partially reconstructed image 630 (Figure 7D). Inpainting of only a relatively small masked area 611, when compared with treating the buildings as a whole, may result in a more accurate and detailed reconstruction of the first masked area.

Following the inpainting of the first mask 611, a second mask 612 is applied to the partially reconstructed image 630, which corresponds to the second building 602 (Figure 7B). This second mask 612 is then inpainted (Figure 7E).

Inpainting of the second mask uses contextual data from the surrounding image, which includes contextual data from the inpainting of the first masked area 611. Therefore, by inpainting only one building at a time, a more accurate reconstruction of each masked area may be achieved. This exemplifies the benefit of recurring image inpainting of a panoptically segmented image when compared with inpainting of a semantically segmented image without instance segmentation.

A third masked area 613 (Figure 7C), corresponding to the third building 603, is then inpainted (Figure 7F). The process iterates until each building has been inpainted, thus forming the final reconstructed image 620 (Figure 7G). By performing this process, it can be seen that, for example, a road network that has been occluded from the field of view of an image capturing device, such as an aerial image capturing device, by objects, such as buildings, may be reconstructed.

While the order of masking and inpainting may be random, it is also possible to perform this process in a non-random order. For example, the smallest mask, which may be considered to be the mask most likely to be inpainted accurately, may be inpainted first. The process may then select increasingly large sizes of masks to apply.

In another example, the first mask applied may correspond to the mask with the most surrounding contextual information from the image. This mask may instead be considered to be the mask most likely to be accurately inpainted. The process may then iterate through masks to be applied in an order from most contextual information to least contextual information in order to achieve a more accurate reconstruction of the image.

In this example, deciding which mask has the most contextual information could include considering the contextual information provided from previously inpainted masked areas, or it could be limited to contextual information from the original image only. However, the contextual information from previously inpainted areas is always used in the inpainting process, once an appropriate mask is selected.

Other non-limiting examples of the order of masking and inpainting include the order that objects have been panoptically segmented in, moving across the image in a specific direction, and spiralling inwards from the outside of an occluded area towards the centre of an occluded area. Each of these approaches has various benefits associated with them, and thus the choice of which approach to apply will depend on the application and/or situation.

While this disclosure has primarily referenced the use of photographic images, it will be readily apparent that the disclosure applies equally to images taken, for example, by mobile LiDAR sensors or other imaging means.

Figure 8 shows an image reconstruction system 800.

Figure 8 shows an aerial image capturing device 801 for capturing an image 802 of an aerial scene. The image reconstruction system 800 may comprise the aerial image capturing device 801, or this may be an external device, with the captured image 802 being sent directly or indirectly to the image reconstruction system 800.

The system 800 comprises a panoptic segmentation module 803. The panoptic segmentation module 803 panoptically segments the image 802 of the aerial scene. This panoptic segmentation module 803 comprises a panoptic segmentation model 804. This panoptic segmentation model 804 is pre-trained on representative data for the intended application of the system 800. This model may be trained in any number of ways. For example, the model may be trained by using captured images and corresponding semantically segmented images appropriate for the intended application of the system 800.

The system 800 further comprises an image masking module 805. This module 805 applies a mask to the image 802 which corresponds with a panoptically segmented object of an appropriate class to be inpainted, for example a building.

The system 800 further comprises an image inpainting module 806 for inpainting a masked area of the image 802. The image inpainting module 806 comprises an image inpainting model 807. This image inpainting model 807 is pre-trained on representative data for the intended application of the system 800. This model may be trained in any number of ways. For example, the model may be trained by using captured images and corresponding masked images appropriate for the intended application of the system 800.

The image masking module 805 and the image inpainting module 806 iterate through the processes of masking and inpainting of the image 802 until every panoptic object of an appropriate class has been masked and inpainted in the image 802. The resultant reconstructed image 808 of an aerial scene is thus formed.

The disclosed systems and methods of image reconstruction may have several use cases. These use cases include, for example, aerial mapping, bathymetry, autonomous vehicle applications, and the removal of objects from images to create artificial images for specific purposes.

Mapping may include the mapping of road networks. Bathymetry may be defined as the mapping of the ocean, and often uses LiDAR imagery to capture LiDAR images. Examples where removal of classes of objects from images may include for the purposes of decluttering of images to better highlight the salient features of an image, for example a runway of an airfield. Autonomous vehicles may include, for example, trains, aircraft and automotive vehicles. Further possible applications of the disclosed systems and methods include augmented reality (AR) applications that blend real world images with computer generated images.

There are various benefits of the disclosed systems and methods. These benefits may include improved mapping capabilities, improved obstacle detection, increased traffic scene comprehension, reduced navigation planning requirements and improved safety. Various of these benefits may be achieved by more detailed and/or more accurate reconstruction of occluded images. Various of these benefits may be achieved by utilization of the panoptic segmentation data available as a result of the disclosed systems and methods. Various of these benefits may be achieved as a result of fewer images, and in some cases only one image, being required in order to form a reconstructed image. For example, reduced navigation planning requirements of aerial image capturing devices may be achieved as a result of limiting, or eliminating, the requirement to capture images of a scene from multiple angles.

## Claims

1. A method of reconstructing an image, the method comprising:
performing panoptic segmentation of the image;
wherein the panoptic segmentation of the image comprises:
performing semantic segmentation of each pixel, or group of pixels, of the image to classify the pixel, or group of pixels, into one of at least a first class and a second class; and
performing instance segmentation of the image to identify at least a first object of the first class and a second object of the first class;
wherein the method further comprises:
performing recurring image inpainting of the image;
wherein the recurring image inpainting of the image comprises:
applying a first mask corresponding to the first object to the image;
inpainting the first mask to form a partially reconstructed image;
applying a second mask corresponding to the second object to the partially reconstructed image; and
inpainting the second mask.

2. The method as claimed in claim 1, wherein the image is a LiDAR image; or the image is a photographic image.

3. The method as claimed in any one of the preceding claims, further comprising capturing the image.

4. The method as claimed in any one of the preceding claims, wherein the semantic segmentation is arranged to classify each pixel of the image.

5. The method as claimed in any one of the preceding claims, wherein the first class comprises at least one of: buildings, vehicles, and foliage.

6. The method as claimed in any one of the preceding claims, wherein performing the semantic segmentation comprises using a convolutional neural network to perform the semantic segmentation.

7. The method as claimed in any one of the preceding claims, wherein the performing image inpainting comprises using a convolutional neural network to perform the image inpainting.

8. The method as claimed in any one of the preceding claims, wherein the image inpainting is performed independently from the semantic segmentation.

9. The method as claims in any one of claims 1 to 7 wherein the image inpainting is semantically guided by the semantic segmentation.

10. The method as claimed in any one of the preceding claims, wherein the image is an aerial image.

11. The method as claimed in any one of the preceding claims, wherein:
performing the instance segmentation of the image comprises identifying a third object of the second class and a fourth object of the second class; and
performing recurring image inpainting of the image further comprises:
applying a third mask corresponding to the third object to the partially reconstructed image;
inpainting the third mask;
applying a fourth mask corresponding to the fourth object to the partially reconstructed image; and
inpainting the fourth mask.

12. An image reconstruction system comprising:
a panoptic segmentation module for panoptically segmenting an image;
an image masking module for applying masks to the image;
an image inpainting module for inpainting the mask on the image;
wherein the panoptic segmentation module is arranged to semantically segment each pixel, or group of pixels, of the image to classify each pixel, or group of pixels, into one of at least a first class and a second class;
wherein the panoptic segmentation module is arranged to instance segment the image to identify at least a first object of the first class and a second object of the first class;
wherein the image masking module is arranged to apply a first mask corresponding to the first object to the image;
wherein the image inpainting module is arranged to inpaint the first mask to form a partially reconstructed image;
wherein the image masking module is arranged to apply a second mask corresponding to the second object to the partially reconstructed image; and
wherein the image inpainting module is arranged to inpaint the second mask.

13. The image reconstruction system as claimed in claim 12, further comprising an image capturing device.

14. The image reconstruction system as claimed in claim 12 or 13, wherein the panoptic segmentation module is arranged to use a pre-trained panoptic segmentation model.

15. The image reconstruction system as claimed in any one of claims 12 to 14, wherein the image inpainting module is arranged to use a pre-trained image inpainting model.
